# EUROPEAN PATENT APPLICATION

(11) **EP 1 804 111 A1**
(43) Date of publication of application: **04.07.2007**
(21) Application number: 05782333.8
(22) Date of filing: 09.09.2005
(51) Int. Cl.: G02B 27/01, B60J 1/02, B60K 35/00

(54) **WINDSCREEN FOR AUTOMOBILE**

(30) Priority: 28.09.2004 JP 2004281175
(71) Applicant: CENTRAL GLASS COMPANY, LIMITED, Ube-shi, Yamaguchi-ken 755-0001 (JP)
(72) Inventor: NISHIKAWA, Shinji, Matsusaka-shi, Mie 515-0001 (JP)
(74) Representative: Manitz, Finsterwald & Partner GbR
(86) International application number: PCT/JP2005/016613
(87) International publication number: WO 2006/035587

(57) **Abstract**

In automotive front windshields used for head-up display, there is provided an automotive front windshield **characterized in that** two plate glasses of an interior side and an exterior side are bonded to each other by using two interlayer films, that an optical functional film prepared by laminating an optical rotatory member in the form of film is inserted into the two interlayer films, and that the optical functional film has a thickness of 12µm to 22µm.

## Description

### TECHNICAL FIELD

The present invention relates to a laminated body, in which to a plate glass there is bonded an optical rotatory member or optical functional film, such as hologram, used for the use of head-up display (hereinafter abbreviated to HUD), in which the display light is optically projected and the front view in the front vision or its vicinity is superimposed to make the driver or the like recognize it.

### BACKGROUND OF THE INVENTION

Hitherto, there has been a problem that the display is difficult to be seen as HUD, since the reflected image by two surfaces of the front windshield becomes a double image.

To this problem, Patent Publication 1 discloses a technique in which the display light is turned into a linearly polarized light, it is incident as S-polarized light and is reflected from the surface of glass, and the display light transmitted through the surface is turned into P-polarized light by using a polarization direction adjusting film (an optical rotatory member), thereby avoiding the reflection at the back surface and dissolving the double image.

In Patent Publication 1, as shown in Fig. 3, there is disclosed one formed with a polarization direction adjusting film (an optical rotatory member) 4 between an interior side glass 2 and an interlayer film 3 of a laminated glass.

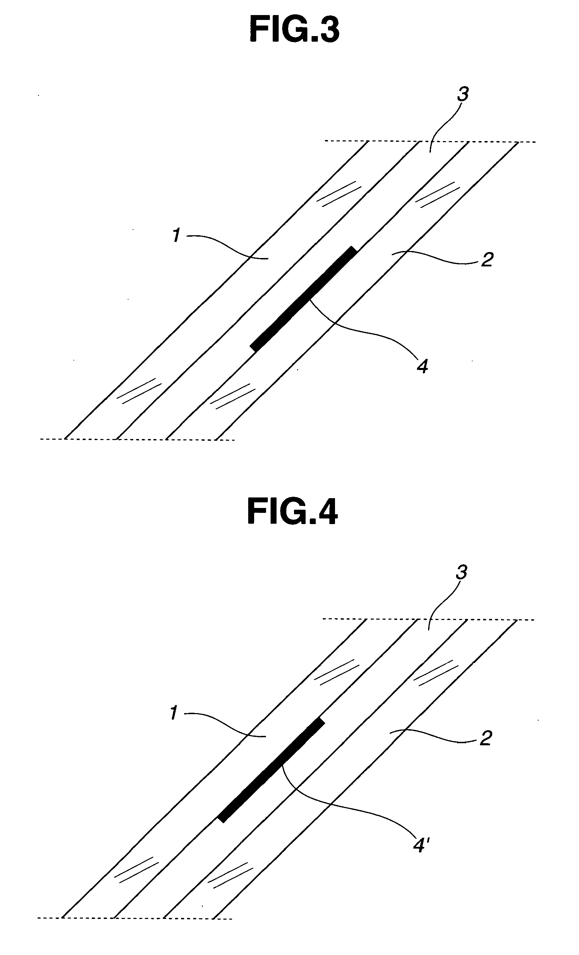

In Patent Publication 2, in the case of forming a polarization direction adjusting film (an optical rotatory member) on a front windshield, as shown in Fig. 4, there is disclosed one formed with a polarization direction adjusting film (an optical rotatory member) between an exterior side glass 1 and an interlayer film 3 of a laminated glass, as one improving light resistance and safety.

An optical rotatory film of Patent Publications 1 and 2 is a liquid crystal high polymer that is in twisted nematic orientation under liquid crystal condition and is in glassy state at a temperature lower than liquid crystal transition point. Its adhesion to glass is very weak, as compared with adhesion between interlayer film and glass, and therefore it is fixed to the glass surface by using an adhesive.

In the case of Patent Publication 1, there is a danger that a broken glass falls in the interior upon glass breakage by the insertion of a polarization direction adjusting film. To solve this, there is a proposal that a polarization direction adjusting film glass is fixed to an exterior side glass, such as Patent Publication 2.

In the case of Patent Publication 2, there is disclosed that an ultraviolet absorbing agent is mixed with an adhesive used for fixing a polarization direction adjusting film to a glass, since the polarization direction adjusting film is exposed to strong ultraviolet rays of sunshine.

In Patent Publication 3, there is a description as to the thickness and the transmission distortion of an insert upon inserting a hologram between a glass and an interlayer film of a laminated glass, and a description that the thickness of the hologram is made to be 7µm to 40µm in order to satisfy the transmission distortion.
Patent Publication 1: Japanese Patent Laid-open Publication 6-40271
Patent Publication 2: Japanese Patent Laid-open Publication 9-175844
Patent Publication 3: Japanese Patent Laid-open Publication 1-86110

### SUMMARY OF THE INVENTION

An optical rotatory member to be formed on a front windshield of an automobile becomes thick in thickness as an adhesive and a barrier layer are laminated. With this, the transmission distortion becomes large depending on the shape of the front windshield. In some cases, it has been difficult to form an optical rotatory member due to the transmission distortion.

An automotive front windshield of the present invention is, in automotive front windshields used for head-up display, an automotive front windshield characterized in that two plate glasses of the interior side and the exterior side are bonded to each other by using two interlayer films, that an optical functional film prepared by laminating an optical rotatory member in the form of film is inserted into the two interlayer films, and that the optical functional film has a thickness of 12µm to 22µm.

### BRIEF DESCRIPTION OF THE DRAWINGS

Fig. 1 is a sectional view of an essential part of an automotive windshield of the present invention;
Fig. 2 is a sectional view showing a structure of the optical functional film;
Fig. 3 is a sectional view of an essential part of an automotive front windshield according to conventional technique; and
Fig. 4 is a sectional view of an essential part of an automotive front windshield according to conventional technique.

### DETAILED DESCRIPTION

In a laminate of the present invention, an interlayer film is disposed between a glass and an optical functional film. Therefore, it can pass a penetration resistance test and an impact resistance test according to R3212 (automotive safety glass test method) with respect to both surfaces of the laminate, thereby leading to safety improvement.
A laminate of the present invention provides a front windshield with less transmission distortion in a display system of a head-up display that conducts a display on a front windshield by forming an optical functional film on the front windshield.

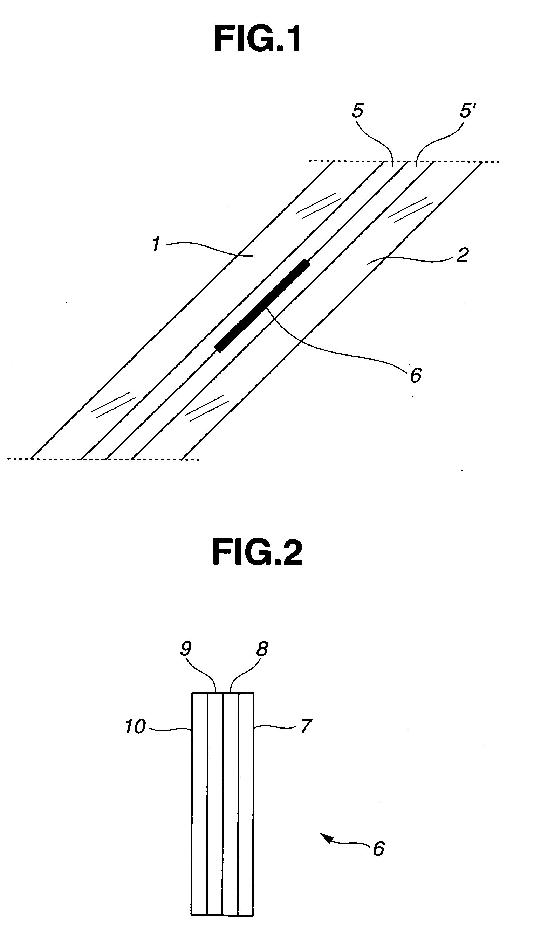

In the optical functional film 6, as shown in Fig. 2, an optical rotatory member 8 in the form of film is laminated on a protective film 9, and a barrier film 7 is laminated on the optical rotatory member 8. The barrier film 7 is for preventing the optical rotatory member 8 from deteriorating by a plasticizer contained in the interlayer, and the thickness is preferably 4µm to 5µm.

It is desirable to use a transparent plastic film such as polyethylene terephthalate as the protective film 9 and to make it have a thickness of 4µm to 5µm in order to laminate the optical rotatory member thereon.

The optical rotatory member 8 is one prepared by applying a liquid crystal high polymer to a transparent substrate such as a transparent plastic film such as polyethylene terephthalate (PET), and then applying a shearing force, followed by heat treatment and cooling to fix the liquid crystal orientation. As the polymer, it is possible to use one that is in twisted nematic orientation under liquid crystal condition and is in glassy condition at a temperature lower than the liquid crystal transition point. It is possible to use a main-chain type liquid crystal high polymer such as optically active polyester, polyamide, polycarbonate and polyester imide, or a side-chain type liquid crystal high polymer such as optically active polyacrylate, polymethacrylate and polymarote.

It is preferable to make the optical rotatory member 8 have a thickness of 4µm to 5µm in order to change the polarization direction by 90 degrees.

The ultraviolet absorbing agent 10 is provided for the purpose of protecting the optical rotatory member from ultraviolet rays. It is possible to use one containing the ultraviolet absorbing agent in adhesive. The thickness is 10µm or less.

As shown in Fig. 1, the optical functional film 6 is inserted into an exterior side interlayer film 5 and an interior side interlayer film 5'. The ultraviolet absorbing agent 10 can be thinner in thickness by making the thickness of the exterior side interlayer film thicker. For example, as in Example 2, it is possible to omit the use of the ultraviolet absorbing agent.

Regarding the thickness of the optical functional film 6, a preferable thickness is 12µm to 22µm from the total of desirable thicknesses of each layer constituting the optical functional film 6.

Regarding the thickness of the interior side interlayer film 5' and the exterior side interlayer film 5, it is desirable in safety that its total thickness is made to be 760µm or greater. It is preferable that the interior side interlayer film 5' is made to be 380µm or greater. Furthermore, it is desirable that the thickness of the exterior side interlayer film 5 is made to be one to two times the thickness of the interior side interlayer film 5'.

From the results of Examples, it is possible to provide an automotive front windshield for HUD, having almost no problem in transmission distortion, by making the optical rotatory film have a thickness of 22µm or less.

### EXAMPLES

### EXAMPLE 1

There was used an optical functional film 6 of a structure shown in Fig. 2. As the optical rotatory member 8, there was used one having a thickness of 4µm and prepared by applying a shearing force to polymethacrylate applied to polyethylene terephthalate (PET), used as a protective layer and having a thickness of 4µm, followed by heat treatment and cooling to fix the liquid crystal orientation.

As the barrier film 7 for preventing the movement of the plasticizer of the interlayer film, an acrylic resin layer of 4µm thickness was formed on the opposite side of the protective film 9 of the optical rotatory member 8. Furthermore, the protective film 9 was covered with a polyvinyl acetal resin (thickness: 10µm) mixed with an ultraviolet absorbing agent, as the ultraviolet absorbing agent 10 and as a protective film for improving weather resistance.

The optical functional film 6 was laminated between the two interlayer films 5, 5' in a manner to dispose the polyvinyl acetal resin layer on the exterior side. Furthermore, the thus laminated two interlayer films were inserted between the exterior side glass 1 of 2mm thickness and the interior side plate glass of 2mm thickness, followed by an autoclave treatment, thereby making a laminated glass used as an automotive front windshield.

Polyvinyl butyral resins, both of which were 380µm in thickness, were used for the two interlayer films.

The automotive front windshield of the present example had almost no problem of transmission distortion caused by insertion of the optical functional film.

It was confirmed to satisfy the penetration resistance test and the impact resistance test, which are defined in JIS standards R3211 and R3212.

### EXAMPLE 2

In the optical functional film 6 shown in Fig. 2, the ultraviolet absorbing agent 10 was not used. Each layer of the barrier film 7, the optical rotatory member 8 and the protective film 9, constituting other optical functional films, was made to be similar to that of Example 1. An optical functional film having a thickness of 12µm was used.

The above-mentioned optical functional film was used, the protective film was disposed on the exterior side, and a laminated glass treatment was conducted by an autoclave treatment, thereby producing a laminated glass shown in Fig. 1 as an automotive front windshield.

A polyvinyl butyral resin film of 760µm thickness was used as the exterior side interlayer film 5 shown in Fig. 1. A polyvinyl butyral resin film of 380µm thickness, similar to that of Example 1, was used as the interior side interlayer film 5'.

There was almost no problem in transmission distortion of the automotive front windshield of the present example. Furthermore, there was no effect of not using the ultraviolet absorbing agent in light resistance, too.
Furthermore, it satisfied the penetration resistance test and the impact resistance test, which are defined in JIS standards R3211 and R3212.

## Claims

1. In an automotive front windshield used for head-up display, the automotive front windshield **characterized in that** two plate glasses of an interior side and an exterior side are bonded to each other by using two interlayer films, that an optical functional film prepared by laminating an optical rotatory member in the form of film is inserted into the two interlayer films, and that the optical functional film has a thickness of 12µm to 22µm.

2. The automotive front windshield according to claim 1, which is **characterized in that** the optical rotatory member has a thickness of 4µm to 5µm.

3. The automotive front windshield according to claim 1 or 2, which is **characterized in that** a total thickness of the two interlayer films is 760µm or greater.

4. The automotive front windshield according to any of claims 1 to 3, which is **characterized in that** the interior side interlayer film has a thickness of 380µm or greater, and that the exterior side interlayer film has a thickness that is one to two times that of the interior side interlayer film.
